# EUROPÄISCHE PATENTSCHRIFT

(11) **EP 1 515 833 B1**
(45) Veröffentlichungstag und Bekanntmachung des Hinweises auf die Patenterteilung: **31.10.2007**
(21) Anmeldenummer: 03752709.0
(22) Anmeldetag: 22.05.2003
(51) Int. Cl.: B29C 65/46, B29K 21/00, B29K 705/00, B29L 23/00

(54) **VERFAHREN ZUR HERSTELLUNG VON VERBUNDSYSTEMEN AUS METALL- UND POLYMERFORMTEILEN**
METHOD FOR THE PRODUCTION OF COMPOSITE SYSTEMS MADE OF METAL AND POLYMER MOULDED ITEMS
PROCEDE DE FABRICATION DE SYSTEMES COMPOSITES CONSTITUES DE PARTIES MOULEES EN METAL ET EN POLYMERE

(30) Priorität: 22.05.2002 DE 10223039
(43) Veröffentlichungstag der Anmeldung: 23.03.2005
(73) Patentinhaber: WOCO AVS GmbH, 63628 Bad Soden-Salmünster (DE)
(72) Erfinder: GANZ, Arnold, 36369 Lautertal (DE)
(74) Vertreter: Weber-Bruls, Dorothée
(86) Internationale Anmeldenummer: PCT/DE2003/001661
(87) Internationale Veröffentlichungsnummer: WO 2003/097333

(56) Entgegenhaltungen:
- EP-A- 0 095 112
- EP-A- 1 048 861
- DE-A- 3 108 221
- DE-A- 3 130 586
- DE-A- 19 721 378
- FR-A- 2 593 467
- GB-A- 957 385
- US-A- 2 545 370
- US-A- 3 387 839
- US-A- 4 390 668
- US-A- 5 761 323
- US-A- 6 083 558
- PATENT ABSTRACTS OF JAPAN Bd. 0092, Nr. 94 (M-431), 20. November 1985 (1985-11-20) & JP 60 132736 A (TOYODA GOSEI KK; others: 01), 15. Juli 1985 (1985-07-15) & JP 60 132736 A (TOYODA GOSEI KK; others: 01) 15. Juli 1985 (1985-07-15)
- PATENT ABSTRACTS OF JAPAN Bd. 0163, Nr. 06 (M-1276), 6. Juli 1992 (1992-07-06) & JP 4 086245 A (KINUGAWA RUBBER IND CO LTD), 18. März 1992 (1992-03-18) & JP 04 086245 A (KINUGAWA RUBBER IND CO LTD) 18. März 1992 (1992-03-18)
- PATENT ABSTRACTS OF JAPAN Bd. 0092, Nr. 49 (M-419), 5. Oktober 1985 (1985-10-05) & JP 60 099635 A (MORUTEN:KK), 3. Juni 1985 (1985-06-03) & JP 60 099635 A (MORUTEN:KK) 3. Juni 1985 (1985-06-03)
- PATENT ABSTRACTS OF JAPAN Bd. 2003, Nr. 09, 3. September 2003 (2003-09-03) & JP 2003 148454 A (CANON CHEMICALS INC), 21. Mai 2003 (2003-05-21) & JP 2003 148454 A (CANON CHEMICALS INC) 21. Mai 2003 (2003-05-21)
- PATENT ABSTRACTS OF JAPAN Bd. 1999, Nr. 12, 29. Oktober 1999 (1999-10-29) & JP 11 198152 A (KOBE STEEL LTD; NITTA IND CORP), 27. Juli 1999 (1999-07-27) & JP 11 198152 A (KOBE STEEL LTD; NITTA IND CORP) 27. Juli 1999 (1999-07-27)
- PATENT ABSTRACTS OF JAPAN Bd. 0030, Nr. 83 (C-052), 18. Juli 1979 (1979-07-18) & JP 54 058778 A (MATSUSHITA ELECTRIC IND CO LTD), 11. Mai 1979 (1979-05-11) & JP 54 058778 A (MATSUSHITA ELECTRIC IND CO LTD) 11. Mai 1979 (1979-05-11)

## Beschreibung

Die vorliegende Erfindung betrifft ein Verfahren zur Herstellung von Verbundsystemen aus Metall- und Polymerformteilen, insbesondere von Metall/Gummi-Verbundsystemen.

Verfahren zur Herstellung von Metall/Gummiverbundsystemen sind seit geraumer Zeit bekannt und nehmen, z.B. im Automobilbau, stetig an Bedeutung zu. Derartige Verbundsysteme zeichnen sich dadurch aus, daß sie die vorteilhaften Eigenschaften von Metall und Gummi vereinen, d.h. zum einen starr und verwindungsresistent sind und zum anderen auch über dauerelastische Eigenschaften verfügen. Zudem weisen derartige Verbundsysteme gegenüber alternativen Vorrichtungen regelmäßig ein geringeres Eigengewicht auf.

Bislang stehen dem Fachmann für Stabilisatoranlagen, Buchsen, Achslager, insbesondere im Fahrwerksbereich, Anschläge, Puffer, insbesondere für Tragarme für Aggregatlager, oder Hülsenlager, insbesondere Drehstabschulterlager, und/oder dergleichen im Wesentlichen zwei Verfahren zur Herstellung von Metall/Gummi-Verbundsystemen zur Verfügung. Gemäß einem ersten Verfahren werden zunächst in einem Vulkanisationswerkzeug eingelegte Metallteile mit einem unvulkanisierten Elastomer umgeben, z.B. umspritzt, woraufhin die Vulkanisation einen Metall/Gummi-Verbund liefert. Damit eine brauchbare Anbindung zwischen Gummi und Metall zustande Kommt, bedarf es regelmäßig eines Haftsystems, das in einem ersten Schritt auf die verwendeten Metallteile aufzutragen ist. Ein derartiges Verfahren findet sich z.B. in der EP 0 684 404 A1 beschrieben. Dieses auch als Vulkanisierung bekannte Verfahren erfordert regelmäßig relativ lange Zykluszeiten, da das Metallteil zunächst auf eine vorgegebene Temperatur zu erwärmen ist. Dadurch, daß das Metallteil in das Vulkanisationswerkzeug eingeführt werden muß, ist üblicherweise für jedes neu gestaltete Verbundbauteil ein spezielles Vulkanisationswerkzeug anzufertigen. Zudem kann nur eine vergleichsweise geringe Anzahl an Werkzeugkalibern realisiert werden. Von Nachteil ist ferner, daß, um die Metallteile zuverlässig und reproduzierbar in das Vulkanisationswerkzeug einlegen zu können, ein nicht geringer apparativer Aufwand erforderlich ist. Des weiteren verläuft der Entformungsvorgang der fertigen Verbundbauteile nicht immer einwandfrei, insbesondere auch da die Vulkanisation unter hohen Drücken stattfindet, so daß ein nicht geringer Ausschußanteil regelmäßig in Kauf zu nehmen ist. Schließlich kommt es nicht selten zu einer Beschädigung der Oberfläche der Metallteile im Vulkanisationswerkzeug, z.B. in Form von Abdrückkanten. Um dennoch einsatzfähige Metall/Gummi-Verbundsysteme zu erhalten, ist sowohl beim Einfügen des Metallteils in das Vulkanisationswerkzeug als auch beim Entformungsvorgang mit großer Sorgfalt vorzugehen. Hierdurch ergeben sich zusätzlich sehr lange Bearbeitungszeiten an der Vulkansiationspresse. Damit trägt nicht nur die Vulkanisationsdauer, sondern auch die Werkzeughandhabung als solche zu langen Zykluszeiten bei. Außerdem wird bei mit anvulkanisierten Elastomerhülsen versehenen Metallteilen eine gesteigerte Korrosionsanfälligkeit beobachtet. Besonders aufwendig gestaltet sich das Verfahren der Vulkanisierung z.B. dann, wenn ein Hülsenlager gefertigt werden soll. Hülsenlager setzen sich üblicherweise aus einer starren Außenhülse und einer koaxial in dieser beabstandet gelagerten starren Innenhülse zusammen, welche über eine Manschette aus Elastomermaterial verbunden werden.

In einem zweiten, weiterentwickelten Verfahren, dem sogenannten Postbonding-Verfahren, wird ein bereits teilvulkanisiertes Gummiformteil verwendet. Das Gummiformteil wird mit Hilfe einer Klemmvorrichtung auf einem Metallteil unter Erzeugung einer möglichst hohen Vorspannung fixiert und verpresst, bevor in einem Temperofen eine Verbindung zwischen Metall und Gummi unter vollständiger Ausvulkanisierung des Gummiformteils hergestellt wird. Auch bei diesem Verfahren wird das Metallteil regelmäßig mit einer Haftschicht versehen. Ein solches Postbonding-Verfahren findet sich z.B. in der DE 199 19 573 A1 für die Herstellung eines Drehstabschulterlagers beschrieben. Ein zuverlässig haftender Verbund wird allerdings nur dann erhalten, wenn die Heizperiode bei vorgegebener Temperatur nicht zu kurz bemessen ist und im Bereich von mindestens 20 bis 40 min liegt. Üblicherweise liegen die Temperzeiten in der Praxis häufig jedoch sogar bei 60 bis 90 min. Hierdurch resultieren zwangsläufig relativ lange Zykluszeiten. Um mit dem Verfahren gemäß DE 199 19 573 A1 rentabel arbeiten zu können, sind regelmäßig hohe Stückzahlen an vormontierten Metall/Gummi-Systemen, die jeweils mit mehreren separaten Klemmvorrichtungen zu fixieren und verpressen sind, in einen Ofen einzubringen. Neben einem hohen Geräteaufwand läßt sich dabei im Allgemeinen auch ein hoher Arbeitsaufwand, der z.B. bereits durch die Montage und Demontage der Klemmvorrichtungen anfällt, nicht vermeiden. Nachteilig ist bei dem Verfahren gemäß DE 199 19 573 A1 auch, daß nur solche Elastomerformteile geeignet sind, die bei der Entformung einerseits blasenfrei vernetzt vorliegen, andererseits noch nicht vollständig ausvulkanisiert sind, so daß im Elastomer noch freie Vulkanisationsvalenzen vorliegen. Im Ganzen gestaltet sich daher das Postbonding-Verfahren, insbesondere auch für die Herstellung größerer Stückzahlen, als sehr aufwendig und kostenintensiv.

In einem anderen Gebiet, nämlich auf dem Gebiet der Herstellung von Kabeln oder mit Gummi beschichteten Metalldrähten sind weitere, für die Herstellung von Formteilen ungeeignete Verfahren bekannt. So wird bspw. gemäß der US 3,695,228 unvulkanisiertes Gummi bei der Reifenherstellung, insbesondere bei der Herstellung von Reifenkernen, eingesetzt, indem ein mit unvulkanisiertem Gummi versehener Metalldraht durch eine in einer Druckkammer angebrachte Metallwendel geführt wird, die ein hochfrequentes Induktionsfeld erzeugt. Auf diese Weise erhält man eine Gummibeschichtung mit einem hohen Vulkanisationsgrad in Nachbarschaft zum Metalldraht und einem geringen Vulkanisationsgrad im äußeren Randbereich der Gummiummantelung. Dieser äußere Bereich ist demgemäß klebrig und haftet an jedweden Oberflächen leicht an, so daß die beschichteten Drähte nicht ohne weiteres auf einfache Weise separat zu handhaben sind und in der Regel auch nicht separat gehandhabt werden. Zudem begrenzt die Verwendung einer Druckkammer zur Herstellung dieser beschichteten Drähte zwangsläufig die Geometrie und Größe der verwendbaren Beschichtungskörper. Für eine Massenproduktion von Einzelteilen ist das Verfahren gemäß US 3,695,228 daher auch nicht geeignet. Technische Gummiformteile sind auf diese Weise nicht zugänglich.

Induktionsheizungen werden auch beispielsweise zur Aktivierung eines Klebematerials verwendet. So ist in der WO 96/21550 die Aktivierung eines Klebemittels zwischen einem Metallteil und einem dieses umhüllenden Gummiteil über ein Induktionsfeld offenbart.

Des Weiteren ist die Aktivierung eines Klebers über ein Induktionsfeld bei der Herstellung von verklebten Kunststoff- und Metallprofilen auch aus der DE 31 08 221 A1 bekannt Ferner werden Induktionsfelder auch bei der Verbindung von Oberflächen thermoplastischer Kunststoffe miteinander oder mit anderen Stoffen, wie Papier oder Pappe, verwendet. So offenbart die CH 463088 A ein Verfahren, bei dem eine Metallfolie, insbesondere eine Aluminiumfolie, zwischen zwei zu verbindende Oberflächen, beispielsweise zwischen zwei Kunststoffoberflächen, eingebracht und anschließend induktiv erwärmt wird, so daß eine thermoplastische Kunststofffolie oder thermoplastische Kunststofflcaschierung entsteht. Solche Folien oder Kaschierungen sind insbesondere für wasserdampf und aromadichte Verpackungen geeignet, nicht jedoch für die Herstellung von Formteilen, wie beispielsweise Hülsenlager.

Gemäß der DE 30 38 069 A1 ist auch beim Herstellen von Einmalkanülen von Einwegspritzen unter Einschmelzen eines metallischen Kanülenrohrs in einem Ansatz aus Kunststoff durch zeitweises Erzeugen einer Heizstromaufheizung in dem dem Ansatz benachbarten Bereich des Kanülenrohrs zum Anschmelzen des Kunststoffes des Ansatzes am Kanülenrohr ein Induktionsfeld einsetzbar.

Zudem soll gemäß der JP-04267131 A ein glasfaserverstärktes Nylongetriebe auf einen Stahlschaft durch Anlegen eines hochfrequenten Induktionsfeldes fest aufgebracht werden, in dem ein Verschmelzen im Kontaktbereich des Getriebes mit dem Schaft stattfindet.

In der US 3,387,839 wird ein Verfahren zur Herstellung von Verbundsystemen aus Metall- und Polymerformteilen in Form von Buchsen offenbart, bei dem zunächst ein ausvulkanisiertes Formteil in Anlage mit dem Metallteil gebracht wird. Für die Anbindung dieser Formteile wird die innen liegende Metallfläche mit einem sogenannten Primer versehen, auf den zusätzlich eine Klebeschicht aufzubringen ist, welche dann in Kontakt mit dem Elastomerteil tritt. Die Klebeschicht basiert auf einem organischen Diisocyanat und einem chlorierten Nitrilgummi. Der auf diese Weise präparierte Verbund wird thermisch behandelt, um die gewünschte Verbindung zu erhalten. Gemäß der US 3,387,839 kann hierfür auf ein geschmolzenes Salzbad, induktives Heizen und dielektrisches Heizen zurückgegriffen werden.

Der vorliegenden Erfindung liegt daher die Aufgabe zugrunde, ein Verfahren zur Herstellung von Metall/Gummi-Verbundsystemen für Stabilisatoren, Buchsen, Achsenlager, insbesondere im Fahrwerksbereich, Anschläge, Puffer, insbesondere Tragarme für Aggregatlager, oder Hülsenlager, insbesondere Drehstabschulterlager, und/oder dergleichen zur Verfügung zu stellen, das frei von den Nachteilen vorbekannter Verfahren ist, insbesondere kurze Zykluszeiten ermöglicht, einen möglichst geringen apparativen Aufwand sowie Raumbedarf erfordert, mit niedrigen Investitionskosten auskommt, ein hohes Maß an Flexibilität hinsichtlich Form und Größe der Verbundsysteme zulässt und auch für die Massenherstellung in Frage kommt.

Diese Aufgabe wird erfindungsgemäß gelöst durch die Merkmale von Anspruch 1.

Bevorzugte Ausführungsformen des erfindungsgemäßen Verfahrens sind in den Ansprüchen 2 bis 16 beschrieben

Gemäß der Erfindung wurde also ein Verfahren gefunden, bei dem mindestens ein Metallteil und mindestens ein Polymerformteil, insbesondere ein Gummiformteil, zumindest bereichsweise, aneinander anliegen, wobei das Metallteil oder zumindest ein Bereich der Fläche, an der Metallteil und Polymerformteil aneinander anliegen, auch Kontaktfläche genannt, zumindest zeitweilig, insbesondere für mindestens 10 sec, kontinuierlich oder intervallweise, mindestens einem niederfrequenten Induktionsfeld mit einer Frequenz von bis zu 25 kHz mindestens einer induktiven Heizeinheit ausgesetzt werden.

Geeignete Metallteile können massiv wie auch hohl sein und z.B. in Form von Stäben oder Rohren, beispielsweise mit rundem oder kantigem Querschnitt, vorliegen. Als Metalle kommen beispielsweise alle herkömmlicher Weise verwendeten Konstruktionsmetalle in Betracht. Bevorzugt wird z.B. auf Metallteile aus Stahl zurückgegriffen. Des weiteren eignen sich insbesondere auch Buntmetalle wie Antimon, Blei, Cadmium, Kobalt, Kupfer, Bismut, Zink und deren Legierungen sowie Metalle mit oxidbildenden oder oxidierten Oberflächen. Die Geometrie und Größe der in dem erfindungsgemäßen Verfahren zum Einsatz kommenden Metallteile kann in weiten Grenzen frei variiert werden. Die Metalloberfläche kann z.B. glatt, poliert oder, insbesondere in dem Bereich, in dem der Verbund zustande kommen soll, angerauht sein. Weiterhin eignen sich selbstverständlich auch lackierte, beispielsweise pulverlakierte Oberflächen.

Als Polymerformteile kommen Formteile aus einem Elastomermaterial, d.h. mit einem federelastischen Eigenschaftsprofil, z.B. aus Thermoplastischen Elastomeren (TPE's), elastischen Blockcopolymeren, z.B. Kraton^{®} (Shell AG), natürlichem oder synthetischem Kautschuk, z.B. Naturkautschuk oder Siliconkautschuke, insbesondere in ausvulkanisierter Form, und insbesondere ausvulkanisiertem Gummi in Frage. Dabei wird auf nahezu oder teilweise ausvulkanisiertes Elastomermaterial, insbesondere Gummi zurückgegriffen In diesem Zusammenhang ist darauf hinzuweisen, daß eine Vulkanisation unter Einwirkung einer bestimmten Temperatur und eines bestimmten Druckes über eine bestimmte Zeitdauer stattfindet, so daß durch Beeinflussung besagter drei Parameter, also Temperatur, Druck und Zeit, der Grad der Vulkanisation bestimmt werden kann. Erfindungswesentlich ist in diesem Zusammenhang, daß das Elastomerformteil zumindest soweit vulkanisiert ist, daß es den ihm gestellten Anforderungen, insbesondere betreffend Steifigkeit und Lebensdauer, bereits genüge leistet. Beispielsweise kann das Elastomerformteil bei einer Temperatur von ca. 180°C in einem Vulkanisationsformwerkzeug mit einem Innendruck von ca. 40 bar über 5 Minuten vulkanisiert werden, so daß es zumindest teilvulkanisiert ist.

Bevorzugt ist, daß das Polymerformteil das Metallteil zumindest bereichsweise, insbesondere vollständig, ummantelt oder umhüllt. Beispielsweise kann ein zylinder- oder quaderförmiger Metallstab, z.B. abschnittsweise, mit einer Manschette aus einem elastomeren Polymermaterial, insbesondere unter Vorspannung, umgeben sein. Ummantelt ein Formteil aus einem Elastomermaterial ein Metallteil zumindest bereichs- bzw. abschnittsweise vollständig, hat es sich als vorteilhaft erwiesen, wenn eine Vorspannung im Bereich von etwa 3 bis 15% eingestellt wird.

Für die Durchführung des erfindungsgemäßen Verfahrens hat es sich weiterhin als vorteilhaft herausgestellt, wenn die aneinander anliegenden Metall- und/oder Polymerformteile fixiert vorliegen. Auf diese Weise wird vermieden, daß Metall- und Polymerformteile vor oder während der Herstellung des Verbundsystems die gewünschte, vorab eingestellte Position verlassen.

Das Polymerformteil und das Metallteil liegen, bevor zumindest aber während und/oder nachdem das an dem Polymerformteil anliegende Metallteil einem niederfrequenten Induktionsfeld ausgesetzt wird bzw. gewesen ist, miteinander verpresst vor, insbesondere unter Verwendung mindestens einer Klemmvorrichtung.

Durch Verwendung eines von außen angewendeten Pressdrucks auf die aneinander anliegenden Metall- und Polymerformteile wird üblicherweise eine noch innigere Verbindung im Verbundsystem aus Metall- und Polymerformteil erzielt. Dabei ist es im allgemeinen günstig, den Pressdruck, während Metall- und Polymerformteil einem Induktionsfeld ausgesetzt sind, für wenigstens 10 sec, vorzugsweise für wenigstens 30 sec aufrechtzuerhalten, wobei diese Zeitspanne geeigneterweise gegen Ende der Heizphase liegt. Aus praktischen Erwägungen wird der Pressdruck über geeignete Klemmvorrichtungen in der Regel bereits aufgebaut, bevor aneinander liegende Metall- und Polymerformteile einem niederfrequenten Induktionsfeld ausgesetzt werden, und auch während der Phase des Ausgesetztseins beibehalten.

Als vorteilhaft hat sich erwiesen, wenn der durch z.B. eine bzw. mehrere Klemmvorrichtungen erzeugte Klemmdruck nach der Beendigung des Heizvorgangs durch die induktive Heizeinheit für eine bestimmte Zeitdauer aufrechterhalten wird. Dabei hat sich als geeignet herausgestellt, den Pressdruck für mindestens etwa 10 sec aufrechtzuerhalten. Ferner hat sich herausgestellt, daß im allgemeinen bereits eine Zeitdauer von 10 bis 20 sec ausreicht, um eine verbesserte Haftung zwischen Metall- und Polymerformteil im Verbundsystem zu erzeugen. Bevorzugt wird der Klemmdruck nach Beendigung des Heizvorgangs für eine Zeitdauer von 20 bis 55, besonders bevorzugt von 55 bis 300 sec aufrechterhalten, wobei bereits bei einer Zeitdauer von 55 bis 70 sec optimierte Ergebnisse erhalten werden. Es hat sich herausgestellt, daß es zu besonders guten Ergebnissen kommt, wenn Druck und Temperatur derart eingeleitet werden, daß zuerst eine Wärmeeinleitphase und dann eine Temperaturhaltephase vorliegen, die jeweils ca. 30 Sekunden dauern können und über die jeweils der Druck angelegt bleibt

Geeignete Klemmvorrichtungen zum Aufbau und zur Aufrechterhaltung des Pressdrucks sind im allgemeinen bereits bekannt, z.B. aus dem Postbonding-Verfahren. Üblicherweise wird aus Klemmvorrichtungen aus Metall zurückgegriffen. Aber auch nichtmetallische Klemmvorrichtungen, z.B. solche aus einem mechanisch beanspruchbaren Kunststoff, wie Polyamid, Polyoxymethylene oder syndiotaktisches Polystyrol oder deren schlagzähmodifizierte Varianten oder Kevlaer, oder solche aus keramischen Materialien können eingesetzt werden. Die Verwendung nichtmetallischer Klemmvorrichtungen hat den Vorteil, daß sie auch im Bereich des Induktionsfeldes angebracht werden können, ohne selber bei der Herstellung des Verbundsystems erwärmt zu werden. Dadurch erhöht sich nicht nur die Anzahl der Möglichkeiten bei der Anbringung solcher Klemmvorrichtungen, auch wird die Außenoberfläche des Polymerformteils nicht thermisch beansprucht, wie dieses bei Klemmvorrichtungen aus Metall häufig der Fall ist. Hierdurch werden die elastischen Eigenschaften des Polymerformteils, insbesondere des Gummiformteils, nicht in Mitleidenschaft gezogen, und die Optik der Oberfläche wird nicht beeinträchtigt.

Zwischen aneinander anliegenden Metall- und Polymerformteilen, kann zumindest bereichsweise, mindestens eine kontinuierliche oder diskontinuierliche Haftschicht vorliegen. Als geeignete Haft- bzw. Klebermaterialien kommen z.B. Zweikomponentenhaftvermittler, beispielsweise bestehend aus einem Primer und einem Cover, in Betracht, wie sie üblicherweise zum dauerhaften Verbinden von Metall und Kunststoffen, z.B. Gummi, eingesetzt werden. Solche Zweikomponentenhaftvermittler sind im Handel erhältlich, z.B. in Form der Produkte Chemosil der Henkel KGaA, Düsseldorf. Dabei kann des weiteren vorgesehen sein, als Haftschicht nur ein Einkomponentenhaftvermittler zu verwenden. Hierdurch wird die Verarbeitung vereinfacht und die Verarbeitungsdauer verkürzt. Zudem verringert sich der Materialaufwand.

Insbesondere bei Verwendung von Metallteilen auf Basis von Buntmetallen oder deren Legierungen sowie von Metallteilen mit oxidierten, vorzugsweise oxidbildenden Oberflächen kann für die Erzeugung eines höchsten Ansprüchen genügenden Verbundsystems auf jegliches Hattsystem vollständig verzichtet werden. Demgemäß wird beispielsweise in einer Ausgestaltung der Erfindung bei Verwendung von Siliconkautschuken, z.B. bei Anwendung bzw. Auftragung von Flüssigsiliconen, insbesondere auf oxidierten, vorzugsweise oxidbildenden Metalloberflächen, kein Haftvermittler eingesetzt.

Das Induktionsfeld wird wenigstens bis zum Erreichen einer vorgegebenen Aktivierungs- bzw. Hafttemperatur aufrechterhalten. Dabei wird das Metallteil üblicherweise über die induktive Heizeinheit auf eine vorbestimmte Temperatur, insbesondere im Bereich von etwa 125 bis etwa 220°C, aufgeheizt.

Es kann vorgesehen werden, den Bereich, in dem Metallteil und Polymerformteil aneinander liegen und der den Verbund liefern soll, nach Erreichen der vorgegebenen Aktivierungs- bzw. Hafttemperatur wenigstens einmal für ein Zeitintervall keinem Induktionsfeld auszusetzten. Beispielsweise kann für diesen Fall das Induktionsfeld kurzzeitig abgeschaltet oder in seiner Stärke reduziert werden, z.B. für einen Zeitraum von 5 bis 10 sec, um dann erneut, in der Regel für ein kurzes Zeitintervall von z.B. 3 bis 10 sec, für eine Erwärmung des Metallteils eingesetzt zu werden.

Als induktive Heizeinheiten kommen im allgemeinen solche in Frage, mit denen sich ein niederfrequentes Induktionsfeld erzeugen läßt, in das der zu verbindende Bereich von Metallteil und Polymerformteil zumindest zeitweise eingebracht werden kann. Die Heizeinheit kann z.B. in Form einer Wendel unterschiedlichen Durchmessers oder in Form separater, beabstandeter Elektroden bzw. Pole vorliegen. Insbesondere durch die Verwendung von Polen wird eine große Flexibilität hinsichtlich der Geometrie von Metall- und auch Polymerformteilen erzielt. Induktionsfelder sowie Möglichkeiten und Vorrichtungen zu deren Erzeugung sind dem Fachmann im allgemeinen bekannt. Ein Induktionsfeld im Sinne der vorliegenden Erfindung umfaßt jedenfalls auch solche mit einer Frequenz im Bereich von etwa 40 Hz bis etwa 25kHz, wobei Frequenzen im Bereich von etwa 50 bis 250 Hz, vorzugsweise von 80 bis 150 Hz und insbesondere von 100 bis 120 Hz durchaus ausreichen, um in kurzer Zeit die erfindungsgemäßen Verbundsysteme in hoher Qualität zu erhalten. Die Verwendung niederfrequenter Induktionsfelder hat u.a. auch den Vorteil, daß der zu erwärmende Bereich des Metallteils lokal begrenzt werden kann, wodurch eine gezielte Erwärmung gelingt.

Das Metallteil kann dem Induktionsfeld für eine Gesamtdauer von mindestens 10 sec ausgesetzt werden.

Mit den vorhergehend genannten induktiven Heizeinheiten können z.B. Metallteile aus Stahl, insbesondere Metallrohre, innerhalb kurzer Zeit auf Temperaturen von 150°C und mehr erhitzt werden. Regelmäßig reicht bereits etwa eine Heizdauer von etwa 30 sec, vorzugsweise etwa 40 sec aus, um eine Erwärmung auf etwa bzw. oberhalb von 200°C zu erhalten. Es hat sich für eine unkomplizierte und einfache Verfahrensführung als besonders vorteilhaft erwiesen, daß die gewünschte Endtemperatur über die Heizdauer eingestellt werden kann, wobei im allgemeinen bereits ein einziger Vorversuch ausreicht, bei dem die Oberflächentemperatur des Metalls zu bestimmen ist. Die Wiederholungsgenauigkeit liegt bei einer Toleranz von etwa 4°C. Bei allen weiteren Heizzyklen kann somit vollständig auf eine Temperaturmessung verzichtet werden. Sind die Aufheizeigenschaften des zu verbindenden Metallteils in einem Induktionsfeld ohnehin bekannt, kann auf die vorherige Feststellung der erforderlichen Temperatur vollständig verzichtet werden. Zur Optimierung des Haftverhaltens bei Verwendung einer Haftschicht ist das thermische Verhalten des Haftklebers gegebenenfalls mit zu berücksichtigen.

Vorteilhaft ist, daß die induktive Heizeinheit, insbesondere lagefixiert, in Kontakt mit einer Klemmvorrichtung steht. Dadurch, daß die Klemmvorrichtung sich in unmittelbarer Nähe zu dem zu verbindenden Bereich befindet, ist eine Ausrichtung und gegebenenfalls Fixierung der induktiven Heizeinheit auf den zu verbindenden Bereich besonders einfach möglich. Im allgemeinen können insbesondere Klemmvorrichtungen aus Metall ohne weiteres in der Nähe zur induktiven Heizeinnheit bzw. dem Induktionsfeld angebracht bzw. fixiert werden, ohne das Induktionsfeld zu beeinflussen oder von diesem beeinflusst zu werden.

Es können selbst Klemmvorrichtungen aus Metall verwendet werden, die selber Teil der induktiven Heizeinheit sind. Bei Verbindung mit der Heizeinheit kann dann über die Klemmvorrichtungen ein Induktionsfeld erzeugt werden, das unmittelbar zur Erwärmung des unterliegenden Metallteils führt. Beispielsweise kann in einer Klemmvorrichtung eine Induktionsspule integriert sein. Über die Größe bzw. Breite und/oder Form der Klemmvorrichtungen sowie deren Justierung kann dann unmittelbar auf den zu verbindenden Bereich Einfluß genommen werden. Regelmäßig ist dabei geeignete Vorsorge zu treffen, daß die Klemmvorrichtung selber keinen Verbund mit dem Polymerformteil eingeht. Beispielsweise kann eine solche Klemmvorrichtung mit einer nichtmetallischen Beschichtung, z.B. aus Kunststoff, versehen sein.

Mit dem erfindungsgemäßen Verfahren werden Verbundsysteme aus Metall- und Polymerformteil erhalten, deren aneinander anliegende Bereiche nicht mehr zerstörungsfrei voneinander trennbar sind. Bevorzugte Ausgestaltungen dieser Verbundsysteme sind nur noch durch vollständigen oder nahezu vollständigen Bruch im Polymerformteil bzw. im Gummiteil trennbar (100 % Gummibruch), d.h. eine Trennung entlang der Grenze Metall/Polymerformteil bzw. Gummiteil findet nicht oder nahezu nicht statt. Beispielsweise können Verbundformteile in Form von Stabilisatorenlager aus Metall- und Polymerformteil bzw. Gummiformteil erhalten werden, die eine Abreißkraft größer 10 kN, insbesondere größer 15 kN aufweisen. Unter Abreißkraft kann z.B. diejenige Kraft verstanden werden, die aufzuwenden ist, um das Polymerformteil bzw. das Gummiformteil von dem Metallteil des Verbundsystems abzulösen. Abreißkräfte können z.B. im Abstreifversuch, bei dem eine Kraft auf eine Seitenfläche eines Polymerformteils aufgebracht wird, ermittelt werden. Selbstverständlich ist es mit dem erfindungsgemäßen Verfahren auch ohne weiteres möglich, auf reproduzierbare Weise Verbundsysteme mit Abreißkräften größer oder gleich 20 kN zu erzeugen. Derartige Verbundsysteme, insbesondere Metall/Gummi-Verbundsysteme, können ohne weiteres für vielfältige Anwendungen, z.B. im Automobilbau, eingesetzt werden. Abreißkräfte hängen von mehreren Faktoren ab, z.B. von der im Verbund vorliegenden Fläche und können daher in weiten Bereichen variieren. Bevorzugte Verbünde zeichnen sich dadurch aus, daß ein Abriß nicht an der Fläche zum Metall, d.h. an der Bindefläche, erfolgt, sondern im Polymerformteil. Damit gibt u.a. die Werkstofffestigkeit des Polymerformteils, z.B. des Gummiformteils, sowie gegebenenfalls auch dessen Geometrie die Abreißkraft vor.

Demgemäß kommen nach dem erfindungsgemäßen Verfahren hergestellte Metall/Polymer-Verbundsysteme z.B. als Stabilisatorenlager, Buchsen, Achslager, insbesondere im Fahrwerksbereich, Anschläge, Puffer, insbesondere Tragarme für Aggregatlager, oder als Hülsenlager, insbesondere Drehstabschulterlager, in Betracht.

Gemäß einem weiteren Aspekt der Erfindung eignet sich das erfindungsgemäße Verfahren auch für die, insbesondere automatisierte, Serienherstellung von Verbundsystemen aus Metall- und Polymerformteilen.

Dabei ist ein Verfahren zur Serienherstellung von Verbundsystemen aus Metall- und Polymerformteilen vorgesehen, bei dem
1. man mindestens ein Metallteil A und mindestens ein Polymerformteil A, zumindest bereichsweise, aneinander anlegt, wobei aneinander anliegende Bereiche gegebenenfalls einen Haftvermittler aufweisen,
2. die aneinander anliegenden Bereiche, zumindest abschnittsweise, insbesondere mit einer Klemmvorrichtung, verpresst,
3. das Metallteil A oder die aneinander anliegenden Bereiche von Metallteil A und Polymerformteil A, zumindest abschnittsweise, einem durch mindestens eine induktive Heizeinheit erzeugten Induktionsfeld aussetzt,
4. das Verpressen, nachdem der aneinander anliegende Bereich nicht mehr dem Induktionsfeld ausgesetzt ist, für ein Zeitintervall aufrecht erhält, und
5. das Verpressen, insbesondere durch Öffnen der Klemmvorrichtung, beendet,
wobei mindestens ein Metallteil E und mindestens ein Polymerformteil E aneinander angelegt werden (Schritt 1"") und/oder wobei mindestens ein Metallteil D und mindestens ein Polymerformteil D an aneinander anliegenden Bereichen, zumindest abschnittsweise, verpresst werden (Schritt 2'"), bevor sie einem niederfrequenten Induktionsfeld ausgesetzt werden, und/oder wobei mindestens ein Metallteil C oder die aneinander anliegenden Bereiche von Metallteil C und Polymerformteil C, zumindest abschnittsweise, einem durch mindestens eine induktive Heizeinheit erzeugten Induktionsfeld ausgesetzt werden (Schritt 3") und/oder wobei das Verpressen von aneinander anliegenden Bereichen von Metallteil B und Polymerformteil B, nachdem diese aneinander anliegenden Bereich nicht mehr dem Induktionsfeld ausgesetzt sind, für ein Zeitintervall aufrecht erhalten wird (Schritt 4'), während das Verpressen von Metallteil A und Polymerformteil A beendet, insbesondere die Klemmvorrichtung geöffnet wird (Schritt 5).

In alternativen Ausführungsformen dieses Verfahrens zur Serienherstellung kann auf den Schritt 4 oder auf die Schritte 2, 4 und 5 verzichtet werden.

Die Serienherstellung kann demgemäß getaktet vorgenommen werden. Es können dabei sehr große Stückzahlen in kurzer Zeit erhalten werden. Von Vorteil ist hierbei auch, daß man, insbesondere auch gegenüber herkömmlichen Verfahren, mit einer sehr geringen Anzahl an Klemmvorrichtungen auskommt.

Klemmvorrichtungen umfassen auch Verspannvorrichtungen, insbesondere pneumatische, mechanische und/oder hydraulische Verspannvorrichtungen. Mit dem erfindungsgemäßen Verfahren gelingt es überraschenderweise, sehr kurze Zykluszeiten zu verwirklichen. So reicht es regelmäßig bereits aus, die aneinander anliegenden Metall/Polymerformteil-Systeme weniger als 1 Minute einem Induktionsfeld auszusetzen. Wird mit Klemmvorrichtungen angepreßt, reicht ebenfalls bereits eine sehr kurze Zeitspanne nach Verlassen des Induktionsfeldes aus, während der der Preßdruck aufrecht erhalten wird, um eine nochmals verbesserte Anbindung im Metall/Polymerformteil-Verbundsystem mit nochmals verbesserten Abreißkräften zu erhalten. Regelmäßig sind auch für diese Nachpreßphase Zeiträume von etwa 1 Minute hinreichend. Weiterhin als vorteilhaft hat sich erwiesen, daß die Erwämung lokal begrenzt werden kann, wodurch z.B. bereits an dem Metallteil vor- bzw. anmontierte weitere Vorrichtungen nicht beschädigt oder in Mitleidenschaft gezogen werden. Auch werden Klemmvorrichtungen aus Metall eingesetzt werden, ohne daß diese sich erhitzen, wie sonst bei Verwendung von Temperöfen üblich. Damit entfällt aber auch die Verwendung von Schutzkleidung bzw. Handschuhen oder die Inkaufnahme von Abkühlzeiten im Zusammenhang mit der Entfernung solcher Klemmvorrichtungen. Damit gestaltet sich die Handhabung von Klemmvorrichtungen im Ganzen einfacher und ungefährlicher. Überdies gewährleistet das erfindungsgmäße Verfahren eine sehr gleichmäßige Erwärmung des Metallteils, was regelmäßig auch zu einer sehr einheitlichen Anbindung führt. Zudem wird das Polymerformteil nur im Bereich der Kontaktfläche mit dem Metallteil lokal erwärmt, wodurch eine thermische Beanspruchung des gesamten Polymerformteils entfällt. Demgemäß werden Verbundsysteme von reproduzierbarer Qualität erhalten. Von Vorteil ist weiterhin, daß auch größerdimensionierte Verbundsysteme oder solche mit komplizierter Geometrie unproblematisch und ohne größeren Mehraufwand hergestellt werden können.

Die vorliegenden Erfindung wird im folgenden anhand von Ausführungsbeispielen in Verbindung mit den Zeichnungen näher erläutert. Es zeigt:
- Fig. 1: ein nach dem erfindungsgemäßen Verfahren hergestelltes Hülsenlager in einer induktiven Heizeinheit im Axialschnitt;
- Fig. 2: ein nach dem erfindungsgemäßen Verfahren hergestelltes Stabilisatorlager in einer induktiven Heizeinheit im Axialschnitt.

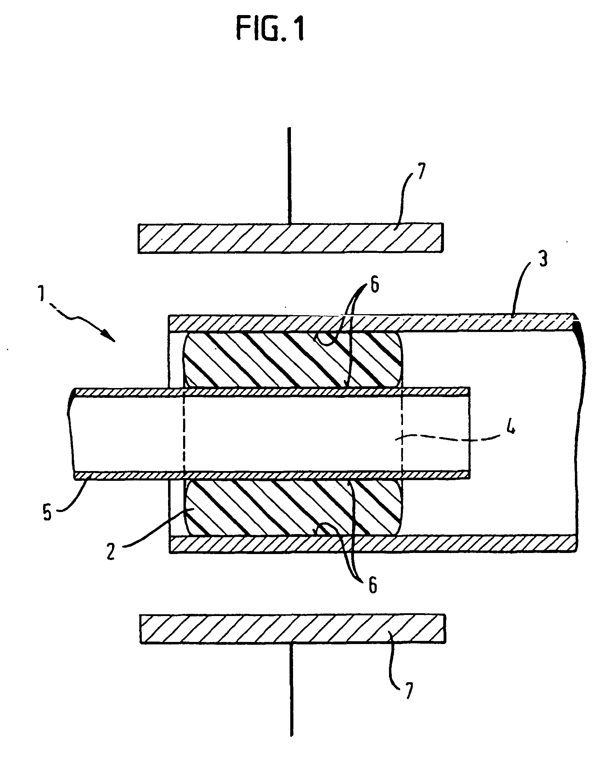

Zur Herstellung des in Fig. 1 gezeigten Lagers 1 wird zunächst ein hülsenformiges elastomeres Manschettenelement 2 in einem herkömmlichen Vulkanisationswerkzeug hergestellt. Vorliegend wurde das Elastomerformteil 2 im Wesentlichen vollständig ausvulkanisiert. Zur Erzeugung einer zumindest geringfügigen Vorspannung ist es derart dimensioniert, daß es einen Außendurchmesser aufweist, der geringfügig größer ist als der lichte Innendurchmesser der außenliegenden Anschlußhülse 3 des Hülsenlagers 1. Das Elastomer 2 kann über eine durchgehende Zentralbohrung eine zylinderförmige Auslassung 4 aufweisen. Alternativ kann bereits bei der Herstellung des Elastomerteils 2 das Formwerkzeug eine derartige zentrale Auslassung 4 vorsehen. Wiederum ist der Durchmesser dieser Auslassung 4 so bemessen, daß er, insbesondere nach dem Einspannen in die Anschlußhülse 3, geringfügig kleiner ist als der Außendurchmesser der Innenhülse 5. Die Flächen 6 von Innen- und Außenhülse 5 bzw. 3, die mit dem Elastomerformteil 2 in Berührung stehen, können in einer Variante des erfindungsgemäßen Verfahrens mit einem Haftvermittler behandelt sein. In dem System aus Innen- und Außenhülse 5, 3 sowie Elastomerformteil 2 liegt inhärent ein Pressdruck vor. Wird wie vorliegend aufgrund der beschriebenen Dimensionierung von Innenhülse, Außenhülse und Elastomerformteil bereits ein Pressdruck auf letzteres ausgeübt, kann selbstverständlich auch auf externe Klemmvorrichtungen verzichtet werden. Diese Vorrichtung wird in ein niederfrequentes Induktionsfeld, erzeugt durch eine induktive Heizeinheit 7, gebracht und für 60 sec dort belassen. Etwa 60 sec nach dem Abschalten des Induktionsfeldes bzw. Herausnehmen aus demselben wird die Klemmvorrichtung gelöst bzw. entfernt. Die dem Induktionsfeld ausgesetzten Metallteile 3, 5 erreichen eine Endtemperatur von etwa 200°C. In dem vorliegenden Verfahren werden in einem Arbeitsgang zwei Bindeflächen erzeugt. Der Abreißversuch liefert bei dem erhaltenen Verbundsystem 1 eine Bruchkante, die vollflächig im Polymerformteil liegt.

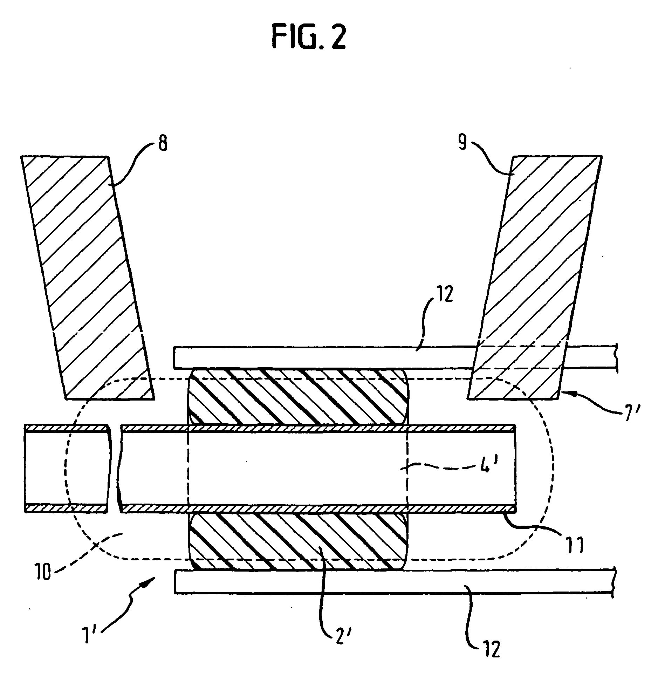

Fig. 2 ist einer Anordnung für die Herstellung eines Stabilisatorlagers 1' zu entnehmen. Die Pole der 8, 9 der induktiven Heizeinheit 7' befinden sich, anders als in Fig. 1 nicht auf gegenüberliegenden Seiten des Verbundsystems, sondern sind beabstandet auf einer Seite des zu verbindenden Bereichs angeordnet. Auf eine Metallhülse 11 ist ein Elastomerformteil 2' in Form einer aufklappbaren Manschette oder zweier Halbschalen aufgezogen. Aufgrund der Dimensionierung der zentralen Auslassung 4' im Elastomerformteil 2' kommt es, wie bei Fig. 1 beschrieben, zu einer Vorspannung. Über die Klemmvorrichtungen 12 werden Elastomerformteil 2' und Metallhülse 11 miteinander verpresst. Das Induktionsfeld 10 kann derart eingestellt werden, daß seine Stärke ausreicht, die Metallhülse 11 auf die gewünschte Haftungs- bzw. Aktivierungstemperatur zu erwärmen, jedoch die Klemmvorrichtungen 12 von dem Induktionsfeld 10 im wesentlichen unbeeinflusst bleiben. Auf diese Weise können ohne weiteres auch noch Klemmvorrichtungen 12 herkömmlicher Art aus Metall eingesetzt werden, ohne daß diese selber einen Verbund mit der Elastomerformteil eingehen. Nach Beendigung der Herstellung des Verbundsystems können die Klemmvorrichtungen 12 ohne weiteres entfernt und das Stabilisatorlager 1' entnommen werden.

Aufgrund der kurzen Zykluszeiten und der einfachen und flexiblen Anwendung eines Induktionsfeldes auf vielfältige Verbundsysteme eignet sich das erfindungsgemäße Verfahren insbesondere auch für die Massenproduktion. Gegenüber der herkömmlichen Verwendung von Temperöfen kommt man bei dem erfindungsgemäßen Verfahren überdies mit einer wesentlich geringeren Anzahl an Klemmvorrichtungen aus. Insbesondere lassen sich auch großdimensionierte Bauteile aus Metall und/oder Kunststoff bzw. Gummi ohne weiteres verarbeiten.

### Bezugszeichenliste

- 1, 1': Lager, Verbundsystem
- 2, 2': Elastomerformteil
- 3: Metallaußenhülse
- 4, 4': Zentrale Auslassung im Elastomerformteil
- 5: Metallinnenhülse
- 6: Kontaktflächen zwischen Elastomerformteil und Außen- bzw. Innenhülse
- 7, 7': Induktive Heizeinheit
- 8,9: Pole der induktiven Heizeinheit 7'
- 10: Induktionsfeld
- 11: Metallhülse
- 12: Klemmvorrichtung

## Patentansprüche

1. Verfahren zur Herstellung von Verbundsystemen (1, 1') aus Metall (3, 5, 11)- und Polymerformteilen (2, 2') in Form von Stabilisatorenlagern, Buchsen, Achslagern, insbesondere im Fahrwerksbereich, Anschlägen, Puffern, insbesondere Tragarmen für Aggregatlager, oder Hülsenlagern, insbesondere Drehstabschulterlager, bei dem zuerst zumindest ein vollständig ausvulkanisiertes oder teilvulkanisiertes Gummiformteil als Polymerformteil (2, 2') und zumindest ein Metallteil (3, 5, 11) bereitgestellt werden, anschließend das Metallteil (3, 5, 11) und das Polymerformteil (2, 2') zumindest bereichsweise, in Anlage aneinander gebracht werden, und schließlich das Metallteil (3, 5, 11) oder zumindest ein Bereich der Fläche (6), an der Metallteil und Polymerformteil aneinander anliegen, zumindest zeitweilig mindestens einem Induktionsfeld mindestens einer induktiven Heizeinheit (7, 7') ausgesetzt wird und wenigstens bis zum Erreichen einer vorgegebenen Aktivierungs- bzw. Hafttemperatur des Metallteils (3, 5, 11) aufrechterhalten wird und wobei das Polymerformteil (2, 2') und das Metallteil (3, 5, 11), bevor und/oder während und/oder nachdem das an dem Polymerformteil (2, 2') anliegende Metallteil (3, 5, 11) einem niederfrequenten Induktionsfeld ausgesetzt wird bzw. gewesen ist, miteinander verpreßt vorliegen, **dadurch gekennzeichnet, daß** das Induktionsfeld mit einer Frequenz von bis zu 25 kHz angelegt wird.

2. Verfahren nach Anspruch 1, **dadurch gekennzeichnet, daß**
das Induktionsfeld eine Frequenz im Bereich von etwa 50 bis 250 Hz aufweist.

3. Verfahren nach einem der vorangehenden Ansprüche, **dadurch gekennzeichnet, daß** zumindest der Bereich (6), an dem das Metallteil (3, 5,11) und das Polymerformteil (2,2') aneinander anliegen, insbesondere nach Erreichen der vorgegebenen Aktivierungs- bzw. Hafttemperatur, wenigstens einmal für ein Zeitintervall keinem Induktionsfeld ausgesetzt wird und nach einem solchen Zeitintervall mindestens einmal wieder einem Induktionsfeld ausgesetzt wird.

4. Verfahren nach einem der vorangehenden Ansprüche, **dadurch gekennzeichnet, daß** nach Beendigung des Heizvorgangs durch die induktive Heizeinheit ein Klemmdruck über eine Zeitdauer von 55 bis 70 Sekunden aufrechterhalten wird.

5. Verfahren nach einem der vorangehenden Ansprüche, **dadurch gekennzeichnet, daß** das Polymerformteil (2, 2`) und das Metallteil (3, 5, 11), nachdem das an dem Polymerformteil (2, 2') anliegende Metallteil (3, 5, 11) einem Induktionsfeld ausgesetzt gewesen ist, für mindestens etwa 10 sec miteinander verpresst vorliegen.

6. Verfahren nach einem der vorangehenden Ansprüche, **dadurch gekennzeichnet, daß** das Induktionsfeld für mindestens 10 sec kontinuierlich oder intervallweise angelegt wird.

7. Verfahren nach einem der vorangehenden Ansprüche, **dadurch gekennzeichnet, daß** das Metallteil (3, 5, 11) über die induktive Heizeinheit (7, 7') auf eine vorbestimmte Temperatur, insbesondere im Bereich von etwa 125 bis etwa 220°C, aufgeheizt wird.

8. Verfahren nach einem der vorangehenden Ansprüche, **gekennzeichnet durch** eine Wärmeeinleitphase und eine nach der Wärmeeinleitphase vorliegende Temperaturhaltephase.

9. Verfahren nach einem der vorangehenden Ansprüche, **dadurch gekennzeichnet, daß** das Polymerformteil (2, 2') das Metallteil (3, 5, 11), zumindest bereichsweise, insbesondere vollständig, ummantelt oder umhüllt.

10. Verfahren nach einem der vorangehenden Ansprüche, **dadurch gekennzeichnet, daß** die aneinander anliegenden Metall- (3, 5, 11) und/oder Polymerformteile (2, 2') fixiert sind.

11. Verfahren nach einem der vorangehenden Ansprüche, **dadurch gekennzeichnet, daß** die induktive Heizeinheit (7, 7'), insbesondere lagefixiert, in Kontakt mit der Klemmvorrichtung steht.

12. Verfahren nach einem der vorangehenden Ansprüche, **dadurch gekennzeichnet, daß** die Klemmvorrichtung ab Bestandteil der induktiven Heizeinheit (7, 7`) bereitgestellt wird.

13. Verfahren nach einem der vorangehenden Ansprüche, **dadurch gekennzeichnet, daß** nichtmetallische Klemmvorrichtungen eingesetzt werden.

14. Verfahren nach einem der vorangehenden Ansprüche, **dadurch gekennzeichnet, daß** zwischen aneinander anliegenden Metall- (3, 5, 11) und Polymerfonnteilen (2, 2'), zumindest bereichsweise, mindestens eine kontinuierliche oder diskontinuierliche Haftschicht vorliegt.

15. Verfahren nach Anspruch 14, **dadurch gekennzeichnet, daß**
die Haftschicht einen Zweikomponentenhaftvermittler oder einen Einkomponentenhaftvermittler umfasst.

16. Verfahren zur Serienherstellung von Verbundsystemen aus Metall- und Polymerformteilen nach einem der vorangehenden Ansprüche, **dadurch gekennzeichnet, daß**
1. man mindestens ein Metallteil A und mindestens ein Polymerformteil A, zumindest bereichsweise, aneinander anlegt, wobei aneinander anliegende Bereiche gegebenenfalls einen Haftvermittler aufweisen,
2. die aneinander anliegenden Bereiche, zumindest abschnittsweise, insbesondere mit einer Klemmvorrichtung, verpresst,
3. das Metallteil A oder die aneinander anliegenden Bereiche von Metallteil A und Polymerformteil A, zumindest abschnittsweise, einem durch mindestens eine induktive Heizeinheit erzeugten Induktionsfeld aussetzt,
4. das Verpressen, nachdem der aneinander anliegende Bereich nicht mehr dem Induktionsfeld ausgesetzt ist, für ein Zeitintervall aufrecht erhält, und
5. das Verpressen, insbesondere durch Öffnen der Klemmvorrichtung, beendet, wobei mindestens ein Metallteil E und mindestens ein Polymerformteil E aneinander angelegt werden und/oder wobei mindestens ein Metallteil D und mindestens ein Polymerformteil D an aneinander anliegenden Bereichen, zumindest abschnittsweise, verpresst werden, bevor sie einem Induktionsfeld ausgesetzt werden, und/oder wobei mindestens ein Metallteil C oder die aneinander anliegenden Bereiche von Metallteil C und Polymerformteil C, zumindest abschnittsweise, einem durch mindestens eine induktive Heizeinheit erzeugten Induktionsfeld ausgesetzt werden und/oder wobei das Verpressen von aneinander anliegenden Bereichen von Metallteil B und Polymerformteil B, nachdem diese aneinander anliegenden Bereiche nicht mehr dem Induktionsfeld ausgesetzt sind, für ein Zeitintervall aufrecht erhalten wird, während das Verpressen von Metallteil A und Polymerformteil A beendet, insbesondere die Klemmvorrichtung geöffnet wird.

## Claims

1. A method for the production of composite systems (1, 1') from metal (3, 5, 11) and polymer parts (2, 2') in the form of stabilizer bearings, bushings, journal bearings, in particular for use in a chassis, stops, buffers, in particular bearing arms for unit bearings, or sleeve bearings, in particular rotating torsion bar shoulder bearings, wherein, firstly, at least one fully vulcanised or partially vulcanised rubber part is provided as the polymer part (2, 2') and at least one metal part (3, 5, 11) is provided, then the metal part (3, 5, 11) and the polymer part (2, 2') are brought together at least in a section, and finally the metal part (3, 5, 11), or at least one region of the surface (6), where the metal part and the polymer part are adjacent to each other, is exposed at least temporarily to at least one induction field of at least one inductive heating unit (7, 7'), and is maintained at least until a preset activation or respectively adhesion temperature of the metal part (3, 5, 11) has been reached, and whereby the polymer part (2, 2') and the metal part (3, 5, 11) are pressed together, before and/or during and/or after the metal part (3, 5, 11) adjacent to the polymer part (2, 2') is subjected to or respectively has been subjected to a low-frequency induction field, **characterised in that** the induction field is applied with a frequency of up to 25 kHz.

2. A method as claimed in Claim 1, **characterised in that** the induction field has a frequency in the region of approximately 50 to 250 kHz.

3. A method as claimed in any one of the preceding claims, **characterised in that** at least the area (6), on which the metal part (3, 5, 11) and the polymer part (2, 2') are adjacent, in particular after the preset activation or respectively adhesion temperature is reached, is subjected at least once for a time interval to no induction field and after such a time interval is subjected at least once more to an induction field.

4. A method as claimed in any one of the preceding claims, **characterised in that** a clamping pressure is maintained over a period of 55 to 70 seconds on completion of the heating procedure by the inductive heating unit.

5. A method as claimed in any one of the preceding claims, **characterised in that** the polymer part (2, 2') and the metal part (3, 5, 11), after the metal part (3, 5, 11) adjacent to the polymer part (2, 2') has been subjected to an induction field, are pressed together for at least approximately 10 seconds.

6. A method as claimed in any one of the preceding claims, **characterised in that** the induction field is applied for at least 10 seconds continuously or in intervals.

7. A method as claimed in any one of the preceding claims, **characterised in that** the metal part (3, 5, 11) is heated to a predetermined temperature via the inductive heating unit (7, 7'), in particular in the region of approximately 125 to approximately 220°C.

8. A method as claimed in any one of the preceding claims, **characterised by** a heat introduction phase and a temperature maintenance phase occurring after the heat introduction phase.

9. A method as claimed in any one of the preceding claims, **characterised in that** the polymer part (2, 2') encloses or sheathes the metal part (3, 5, 11), at least in sections, in particular fully.

10. A method as claimed in any one of the preceding claims, **characterised in that** the adjacent metal parts (3, 5, 11) and/or polymer parts (2, 2') are fixed.

11. A method as claimed in any one of the preceding claims, **characterised in that** the inductive heating unit (7, 7'), is in contact with the clamping device, in particular fixed in position.

12. A method as claimed in any one of the preceding claims, **characterised in that** the clamping device is a component of the inductive heating unit (7, 7').

13. A method as claimed in any one of the preceding claims, **characterised in that** non-metallic clamping devices are employed.

14. A method as claimed in any one of the preceding claims, **characterised in that** there is at least one continuous or discontinuous adhesive layer between adjacent metal (3, 5, 11) and polymer part (2, 2'), at least in sections.

15. A method as claimed in Claim 14, **characterised in that** the adhesive layer comprises a dual-component adhesion promoter or a mono-component adhesion promoter.

16. A method for the series production of composite systems made of metal and polymer part as claimed in any one of the preceding claims, **characterised in that**
1. at least one metal part A and at least one polymer part A, are placed adjacent at least in sections, whereby adjacent areas optionally have an adhesion promoter,
2. the adjacent areas are pressed, at least in sections, in particular with a clamping device,
3. the metal part A or the adjacent areas of metal part A and polymer part A, at least in sections, is subjected to an induction field generated by at least one inductive heating unit,
4. after the adjacent area is no longer subjected to the induction field the pressing is maintained for a time interval, and
5. the pressing is terminated, in particular by opening of the clamping device the pressing ends, whereby at least one metal part E and at least one polymer part E are placed adjacent and/or whereby at least one metal part D and at least one polymer part D are pressed together in adjacent areas, at least in sections, before they are subjected to an induction field, and/or whereby at least one metal part C or the adjacent areas of metal part C and polymer part C, at least in sections, are subjected to an induction field generated by at least one inductive heating unit and/or whereby the pressing of adjacent areas of metal part B and polymer part B, after these adjacent areas are no longer subjected to the induction field, is maintained for a time interval, while the pressing of metal part A and polymer part A ends, and in particular the clamping device is opened.

## Revendications

1. Procédé de fabrication de systèmes composites (1, 1') en métal (3, 5, 11) et de pièces de forme en polymère (2, 2'), ayant la forme de paliers stabilisateurs, de douilles-coussinets, de paliers d'axe, en particulier, dans le domaine des trains d'atterrissage, des butées, des tampons, en particulier des bras support pour des paliers à agrégat ou des paliers à coussinet, en particulier des paliers à épaulement de barres de torsion, pour lequel, d'abord, au moins une pièce de forme en caoutchouc, complètement vulcanisée ou partiellement vulcanisée; réalisée sous la forme de pièce de forme en polymère (2, 2'), et au moins une pièce métallique (3, 5, 11), sont préparées, la pièce métallique (3, 5, 11) et la pièce de forme en polymère (2, 2') étant ensuite placées en appui l'une sur l'autre au moins par zones et, enfin, la plaque métallique (3, 5, 11) ou au moins une zone de la surface (6) sur la pièce métallique et la pièce de forme en polymère, placées en appui l'une sur l'autre, étant exposé, au moins par moments, à au moins un champ d'induction d'au moins une unité de chauffage à induction (7, 7') et maintenus ainsi, au moins jusqu'à l'atteinte d'une température d'activation ou d'adhésion prédéterminée de la pièce métallique (3, 5, 11), et où la pièce de forme en polymère (2, 2') et la pièce métallique (3, 5, 11), avant et/ou pendant et/ou après que la pièce métallique (3, 5, 11), en appui sur la pièce de forme en polymère (2, 2'), soit ou ait été exposée à un champ d'induction à basse fréquence, sont pressées ensemble, **caractérisé en ce que** le champ d'induction est appliqué avec une fréquence allant jusqu'à 25 kHz.

2. Procédé selon la revendication 1, **caractérisé en ce que** le champ d'induction présente une fréquence dans la fourchette d'environ 50 à 250 Hz.

3. Procédé selon l'une des revendications précédentes, **caractérisé en ce qu'**au moins la zone (6) sur laquelle la pièce métallique (3, 5, 11) et la pièce de forme en polymère (2, 2') appuient l'une sur l'autre, en particulier après atteinte de la température d'activation ou d'adhésion prédéterminée, est exposée au moins une fois pour un intervalle de temps à un petit champ d'induction et, après un tel intervalle de temps, étant exposée au moins une fois, de nouveau, à un champ d'induction.

4. Procédé selon l'une des revendications précédentes, **caractérisé en ce qu'**après achèvement du processus de chauffage par l'unité de chauffage à induction, une pression de serrage est conservée sur une durée de 55 à 70 secondes.

5. Procédé selon l'une des revendications précédentes, **caractérisé en ce** la pièce de forme en polymère (2, 2') et la pièce métallique (3, 5, 11), après que la pièce métallique (3, 5, 11), en appui sur la pièce de forme en polymère (2, 2'), ait été exposée à un champ d'induction, sont pressées ensemble pendant au moins à peu près 10 secondes.

6. Procédé selon l'une des revendications précédentes, **caractérisé en ce que** le champ d'induction est appliqué pendant au moins 10 secondes, de façon continue ou par intervalles.

7. Procédé selon l'une des revendications précédentes, **caractérisé en ce que** la pièce métallique (3, 5, 11) est chauffée, par l'unité de chauffage à induction (7, 7'), à une température prédéterminée, en particulier dans la fourchette d'environ 125 à environ 220°C.

8. Procédé selon l'une des revendications précédentes, **caractérisé par** une phase d'induction de chaleur et une phase de maintien de température, se présentant après la phase d'induction de chaleur.

9. Procédé selon l'une des revendications précédentes, **caractérisé en ce que** la pièce de forme en polymère (2, 2') enveloppe ou gaine, au moins par zones, en particulier complètement, la pièce métallique (3, 5, 11).

10. Procédé selon l'une des revendications précédentes, **caractérisé en ce que** les pièces métalliques (3, 5, 11) et/ou pièces de forme en polymère (2, 2'), en appui les unes sur les autres, sont fixées.

11. Procédé selon l'une des revendications précédentes, **caractérisé en ce que** l'unité de chauffage à induction (7, 7'), en particulier ayant été fixée en position, est en contact avec le dispositif de serrage.

12. Procédé selon l'une des revendications précédentes, **caractérisé en ce que** le dispositif de serrage est fourni en tant que composant de l'unité de chauffage par induction (7, 7').

13. Procédé selon l'une des revendications précédentes, **caractérisé en ce que** des dispositifs de serrage non métalliques sont utilisés.

14. Procédé selon l'une des revendications précédentes, **caractérisé en ce qu'**entre des pièces métalliques (3, 5, 11) et des pièces de forme en polymère (2, 2'), en appui les unes sur les autres, est appliquée, au moins par zones, au moins une couche d'adhésion continue ou discontinue.

15. Procédé selon la revendication 14, **caractérisé en ce que** la couche d'adhésion comprend un agent d'accrochage à deux composants, ou un agent d'accrochage monocomposant.

16. Procédé de fabrication en séries de systèmes composites à partir de pièces métalliques et de pièces de forme en polymère, selon l'une des revendications précédentes, **caractérisé en ce qu'**
1. On applique l'une sur l'autre, au moins par zones, au moins une pièce métallique A et au moins une pièce de forme en polymère A, sachant que des zones, en appui les unes sur les autres, présentent, le cas échéant, un agent d'accrochage,
2. Les zones en appui les unes sur les autres sont pressées, au moins par tronçons, en particulier avec un dispositif de serrage,
3. La pièce métallique A ou les zones, en appui les unes sur les autres, de la pièce métallique A et de la pièce de forme en polymère A sont exposées, au moins par tronçons, à un champ d'induction produit par au moins une unité de chauffage par induction,
4. Le pressage, après que les zones en appui les unes sur les autres ne soient plus exposées au champ d'induction, est maintenu pendant un intervalle de temps et,
5. Le pressage est achevé, en particulier par ouverture du dispositif de serrage;
où au moins une pièce métallique E et au moins une pièce de forme en polymère E sont appliquées l'une sur l'autre, et/ou où au moins une pièce métallique D et au moins une pièce de forme en polymère D sont pressées, au moins par tronçons, sur des zones en appui les unes sur les autres, avant qu'elles soient exposées à un champ d'induction, et/ou où au moins une pièce métallique C ou les zones, en appui les unes sur les autres, de la pièce métallique C et de la pièce de forme en polymère C sont exposées, au moins par tronçons, à un champ d'induction produit par au moins une unité de chauffage par induction, et/ou où le pressage de zones, en appui les unes sur les autres, de la pièce métallique B et de la pièce de forme en polymère B, après que ces zones en appui les unes sur les autres ne soient plus exposées au champ d'induction, est maintenu pendant un intervalle de temps, tandis que le pressage de la pièce métallique A et de la pièce de forme en polymère B est achevé, en particulier le dispositif de serrage est ouvert.
